# EUROPÄISCHE PATENTSCHRIFT

(11) **EP 2 542 321 B1**
(45) Veröffentlichungstag und Bekanntmachung des Hinweises auf die Patenterteilung: **03.10.2018**
(21) Anmeldenummer: 11707589.5
(22) Anmeldetag: 02.03.2011
(51) Int. Cl.: B01D 36/00, B01D 35/153, B01D 35/16, F02M 37/22

(54) **FILTER SOWIE HIERFÜR VORGESEHENES FILTERELEMENT**
FILTER AND FILTER ELEMENT PROVIDED THEREFOR
FILTRE ET ÉLÉMENT DE FILTRE POUR CELUI-CI

(30) Priorität: 04.03.2010 DE 102010010304
(43) Veröffentlichungstag der Anmeldung: 09.01.2013
(73) Patentinhaber: HYDAC FILTERTECHNIK GMBH, 66280 Sulzbach/Saar (DE)
(72) Erfinder: KREIBIG, Micha, 66780 Rehlingen-Siersburg (DE); EBERLE, Richard, 66399 Ormesheim (DE)
(74) Vertreter: Bartels und Partner, Patentanwälte
(86) Internationale Anmeldenummer: PCT/EP2011/001011
(87) Internationale Veröffentlichungsnummer: WO 2011/107262

(56) Entgegenhaltungen:
- DE-A1-102006 060 129
- DE-A1-102008 020 223
- DE-A1-102008 020 233

## Beschreibung

Die Erfindung betrifft ein Filterelement mit den Merkmalen im Oberbegriff von Anspruch 1 und ein Filter, insbesondere für mit Wasserbeimengungen belastete Fluide wie Dieselöl, mit den Merkmalen im Oberbegriff des Anspruchs 2.

Filter der oben genannten Art sind Stand der Technik. Sie werden beispielsweise bei Kraftstoffsystemen für Verbrennungsmotoren eingesetzt, um empfindliche Komponenten, insbesondere Einspritzsysteme, gegen Beeinträchtigungen durch im Kraftstoff mitgeführte Wasseranteile zu schützen. Die Abscheidung von im Kraftstoff mitgeführten Wasseranteilen kann hierbei durch einen Koagulationsprozess bewirkt werden, bei dem an dem Filtermedium Wassertröpfchen gebildet werden, die aus dem im Filterelement gebildeten Abscheideraum zum Wassersammelraum des Filtergehäuses abfließen können.

Um die Betriebssicherheit der dem Filter nachgeordneten Systeme zu gewährleisten, ist es wesentlich, dass bei den im Laufe der Betriebszeit erforderlichen Wechselvorgängen des Filterelementes, wobei jeweils beim Entkoppeln der Endkappe des verbrauchten Filterelementes von der Elementaufnahme die Fluidverbindung zwischen Reinseite des Filterelementes und dem Fluidaustritt des Gehäuses unterbrochen wird, keine Kontamination des Systems durch ein Abfallen von am verbrauchten Filterelement angelagerten Verschmutzungen stattfindet.

Die DE 10 2008 020 233 A1 beschreibt ein Filter mit einem Filtergehäuse, in dem mindestens ein Filterelement aufnehmbar ist, dessen Filtermedium beim Filtriervorgang von seiner äußeren Rohseite her in einen inneren, die Reinseite bildenden Filterhohlraum hinein durchströmbar ist, wobei zwischen Rohseite und innerem Filterhohlraum eine Wasser-Abscheideeinrichtung und ein Abscheideraum für abgeschiedenes Wasser vorhanden sind und das Filterelement an seinem dem Bodenteil des Filtergehäuses zugewandten unteren Ende durch eine Endkappe eingefasst ist, die einen Rohrstutzen als Durchlass für aus dem die Reinseite bildenden Filterhohlraum austretendes Fluid und einen den Durchlass zumindest teilweise umgebenden, zum Abscheideraum offenen Wasserdurchlass aufweist und an einer Elementaufnahme des Filtergehäuses festlegbar ist, die sich oberhalb eines am Boden des Filtergehäuses befindlichen Wassersammelraumes befindet und für aus der Reinseite austretendes Fluid einen aus dem Gehäuse herausführenden Fluidaustritt bildet.

Auch die DE 10 2008 020 223 A1 und die DE 10 2006 060 129 A1 offenbaren Filter.

Im Hinblick auf diese Problematik stellt sich die Erfindung die Aufgabe, ein Filterelement und ein Filter der betrachteten Art zur Verfügung zu stellen, dessen Bauweise ein Höchstmaß an Betriebssicherheit gewährleistet, indem bei Wechselvorgängen die Gefahr einer Kontamination am Fluidaustritt des Gehäuses weitestgehend vermieden ist.

Erfindungsgemäß ist diese Aufgabe durch ein Filterelement und einen Filter gelöst, der die Merkmale des Patentanspruches 1 bzw. 2 in seiner Gesamtheit aufweist.

Demgemäß besteht eine wesentliche Besonderheit der Erfindung darin, dass die Endkappe zur Bildung des Fluidweges zwischen der Reinseite und dem Fluidaustritt innerhalb des Rohrstutzens einen inneren Rohrköper aufweist, der sich mit seinem Einlaufende in den die Reinseite bildenden Filterhohlraum erstreckt und an einem Austrittsende zu dem an der Außenseite des Rohrstutzens befindlichen Verbindungsraum hin offen ist.

Ferner ist vorgesehen, dass die Endkappe des Filterelementes speziell so ausgebildet ist, dass ihr Rohrstutzen getrennte, innere Fluidwege sowohl für abgereinigtes Fluid als auch für abgeschiedenes Wasser bildet und in einem Durchgangskanal der Elementaufnahme, der zum Wassersammelraum hin offen ist, aufnehmbar ist, wobei zwischen der Außenseite des Rohrstutzens und der Elementaufnahme wirksame Dichtungsanordnungen einen Verbindungsraum begrenzen, über den bei der Funktionsposition des Filterelementes der reinseitige innere Filterhohlraum mit dem Fluidaustritt des Gehäuses verbunden ist.

Bei dieser Bauweise entsteht bei einem Herausnehmen eines verbrauchten Filterelementes aus der Elementaufnahme eine durchgehende Öffnung, so dass vom Filterelement abfallende Verschmutzungen am reinseitigen Fluidaustritt des Gehäuses vorbei in den Wassersammelraum abfallen.

Ein zusätzlicher weiterer Vorteil der Erfindung besteht darin, dass bei im Filtergehäuse aufgenommenem Filterelement die Dichtungsanordnungen, die zwischen dem Durchgangskanal der Elementaufnahme und dem Rohrstutzen der Endkappe wirksam sind, auch die Abdichtung zwischen der Rohseite des Filtergehäuses und der Reinseite bewirken. Somit erübrigt sich die Notwendigkeit, am Außenumfang der betreffenden Endkappe des Filterelementes, wie dies beim Stand der Technik üblich ist, eine Dichtungsanordnung gegenüber der Innenseite des Gehäuses vorzusehen, sondern stattdessen ist die Abdichtung mit wesentlich kleinerem Dichtungsdurchmesser verwirklicht, wodurch sich verringerte Montagekräfte und dadurch eine Vereinfachung bei Einbau und Ausbau von Filterelementen ergeben.

Für die Bildung des anderen inneren Fluidweges besitzt der Rohrstutzen der Endkappe ein zum Wassersammelraum offenes, freies unteres Ende, wobei zwischen der Außenseite des inneren Rohrkörpers und der Innenseite des Rohrstutzens ein Freiraum diesen Fluidweg vom Abscheideraum zum Wassersammelraum bildet.

Bei besonders vorteilhaften Ausführungsbeispielen kann die Anordnung so getroffen sein, dass der Rohrstutzen und der innere Rohrkörper mit ihren den Innenraum des Filterelementes zugewandten Enden jeweils konzentrische Verbindungsringe bilden, von denen der äußere Ring in den Abscheideraum ragt und außenseitig am Stützrohr des Filtermediums anliegt und der innere Ring in den inneren Filterhohlraum ragt und außenseitig an der Innenseite eines die Reinseite umgebenden, Teil der Wasser-Abscheideeinrichtung bildenden hydrophoben Siebes anliegt.

In vorteilhafter Weise können die Dichtungsanordnungen zwischen Rohrstutzen der Endkappe und Durchgangskanal der Elementaufnahme jeweils durch in Ringnuten des Rohrstutzens sitzende O-Ringe gebildet sein.

In besonders vorteilhafter Weise kann die Anordnung hierbei so getroffen sein, dass ein O-Ring für die Abdichtung zwischen dem der Reinseite zugehörigen Austrittsende des inneren Rohrkörpers und dem Wassersammelraum nahe des unteren freien Endes des Rohrstutzens angeordnet und ein O-Ring für Abdichtung zwischen der der Rohseite zugehörigen Oberseite des Zwischenbodens der Elementaufnahme und der Reinseite am Rohrstutzen oberhalb des Austrittsendes des inneren Rohrkörpers angeordnet sind.

Hinsichtlich der Gestaltung des inneren Rohrkörpers im Rohrstutzen der Endkappe kann die Anordnung so getroffen sein, dass der innere Rohrkörper in der Art eines T-Rohres geformt ist, wobei der am inneren Verbindungsring mündende, sich axial erstreckende Einlaufteil in einen Querkanal übergeht, der zwei Austrittsenden bildet, die an der Außenseite des Rohrstutzens an zwei einander gegenüberliegenden Stellen münden. Das Filterelement kann dadurch in seiner Funktionsposition mehr als eine Drehposition einnehmen.

Nachstehend ist die Erfindung anhand eines in der Zeichnung dargestellten Ausführungsbeispieles im Einzelnen erläutert. Es zeigen:
- Fig. 1: einen Längsschnitt eines mit einer Wasser-Abscheideeinrichtung versehenen Kraftstofffilters gemäß dem Stand der Technik;
- Fig. 2: einen Längsschnitt eines Filters gemäß dem hier zu beschreibenden Ausführungsbeispiel der Erfindung;
- Fig. 3: einen der Fig. 2 entsprechenden Längsschnitt, wobei das Ausführungsbeispiel gegenüber Fig. 2 um 90° verdreht dargestellt ist;
- Fig. 4: eine gegenüber Fig. 1 bis 3 vergrößert und hälftig geschnitten gezeichnete perspektivische Schrägansicht lediglich einer Filterelement-Endkappe des Ausführungsbeispieles der Erfindung;
- Fig. 5: eine der Fig. 4 entsprechend Darstellung, wobei die Endkappe jedoch demgegenüber um 90° verdreht ist; und
- Fig. 6: eine Draufsicht der Endkappe, wobei die in Fig. 5 gezeigte Drehposition dargestellt ist.

Nachstehend ist die Erfindung am Beispiel eines Kraftstofffilters erläutert, der in einem (nicht gezeigten) Kraftstoffversorgungssystem eines Verbrennungsmotors zur Reinigung von Dieselöl vorgesehen ist, das mit gewissen Wasserbeimengungen verunreinigt ist. Die Erfindung eignet sich gleichermaßen für andersartige Fluide.

Die Vorrichtung weist ein Filtergehäuse 1 mit einem hohlzylinderförmigen Hauptteil 3 und einem in sich an dessen Unterseite anschließenden Bodenteil 5 auf. Am oberen Ende ist mit dem Hauptteil 3 ein Gehäusedeckel 7 verschraubt, der für Einbau und Ausbau eines Filterelementes 9 abnehmbar ist. Zwischen der Außenseite des durch eine Filtermatte gebildeten Filtermediums 11 des im Gehäuse 1 aufgenommenen Filterelementes 9 und der Innenwand des Gehäuses 1 befindet sich ein Zwischenraum, der beim Filtrationsvorgang die Rohseite 13 bildet. Der zu reinigende Kraftstoff ist über eine Einlauföffnung 15 zur Rohseite 13 zuführbar und durchströmt das Filterelement 9 von außen nach innen zu einem inneren Filterhohlraum 17 hin, der beim Filtrationsvorgang die Reinseite 19 bildet.

In der bei Filterelementen üblichen Weise sind an den Enden Endkappen 21 und 23 vorgesehen, die Einfassungen für das Filtermedium 11 und ein an dessen Innenseite anliegendes, fluiddurchlässiges Stützrohr 25 bilden. In einem radialen Abstand vom Stützrohr 25 befindet sich ein den inneren Filterhohlraum 17 rohrförmig umgebendes hydrophobes Sieb 26. Um eine Wasserabscheidung zu bewirken, wird bei derartigen Kraftstofffiltern ein Filtermedium 11 benutzt, das für das von Kraftstoff geführte Wasser koagulierend wirkt, so dass Wasser in Tröpfchenform ausfällt, das in dem Zwischenraum zwischen Stützrohr 25 und hydrophobem Sieb 26 verbleibt und absinkt, da das Sieb 26 für koagulierte Wassertropfen undurchlässig ist. Der Zwischenraum bildet daher einen Wasser-Abscheideraum 27, in dem das abgeschiedene Wasser zur Endkappe 23 absinkt.

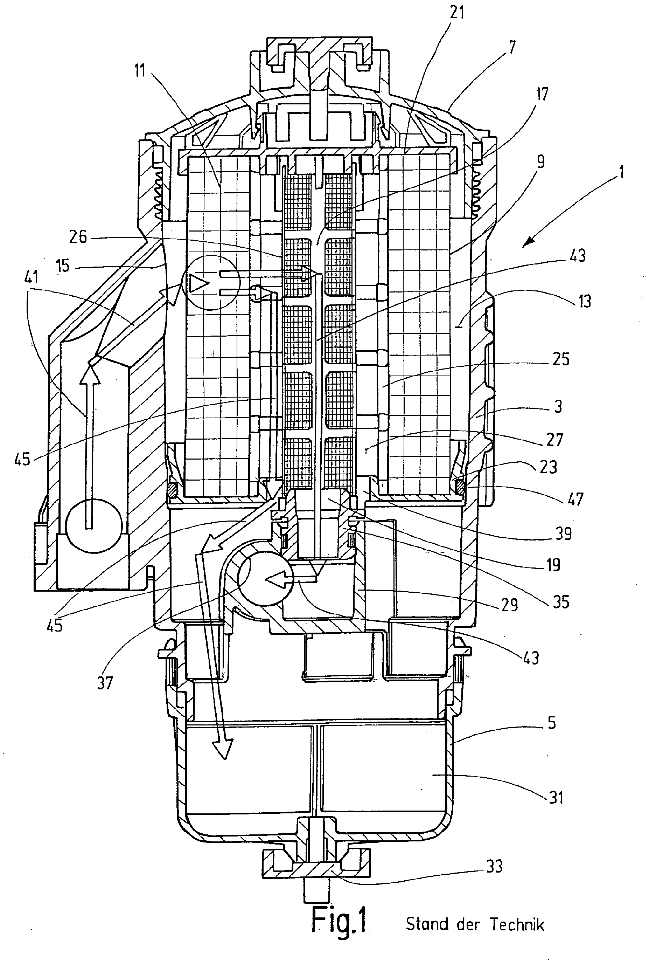

Mit dieser unteren Endkappe 23 ist das Filterelement 9 an einer gehäusefesten Elementaufnahme 29 festgelegt, die sich oberhalb des Bodenteiles 5 befindet, das einen Wassersammelraum 31 bildet, aus dem abgesondertes Wasser über einen Wasserablass 33 abführbar ist. Für die Zusammenwirkung mit der Elementaufnahme 29 weist die Endkappe 23 bei der dem Stand der Technik entsprechenden Vorrichtung einen zentralen Rohrstutzen 35 als Durchlass für den aus der Reinseite 19, d. h. dem inneren Filterhohlraum 17, austretenden, abgereinigten Kraftstoff auf, der zu einem in der Elementaufnahme 29 befindlichen Kraftstoffaustritt 37 und von dort zur Außenseite des Gehäuses 1 gelangt. Für den Abfluss des im Abscheideraum 27 befindlichen, abgeschiedenen Wassers ist in der Endkappe 23 ein den Rohrstutzen 35 umgebender, zum Abscheideraum 27 offener Wasserdurchlass 39 gebildet, über den das abgeschiedene Wasser unmittelbar entlang der Außenseite der Elementaufnahme 29 zum Wassersammelraum 31 gelangt. Die entsprechenden Strömungsverhältnisse sind in Fig. 1 mit Strömungspfeilen verdeutlicht, von denen die Pfeile 41 den Kraftstoffzustrom zu Rohseite 13, die Pfeile 43 die Strömung des gereinigten Dieselöls und die Pfeile 45 die Wasserströmung verdeutlichen. Zur Abdichtung der an der Außenseite des Filterelementes 9 befindlichen Rohseite 13 gegenüber dem bodenseitigen Wassersammelraum 31 befindet sich am Außenumfang der Endkappe 23 eine Dichtungsanordnung in Form eines gegen die Innenseite des Filtergehäuses abdichtenden Dichtringes 47.

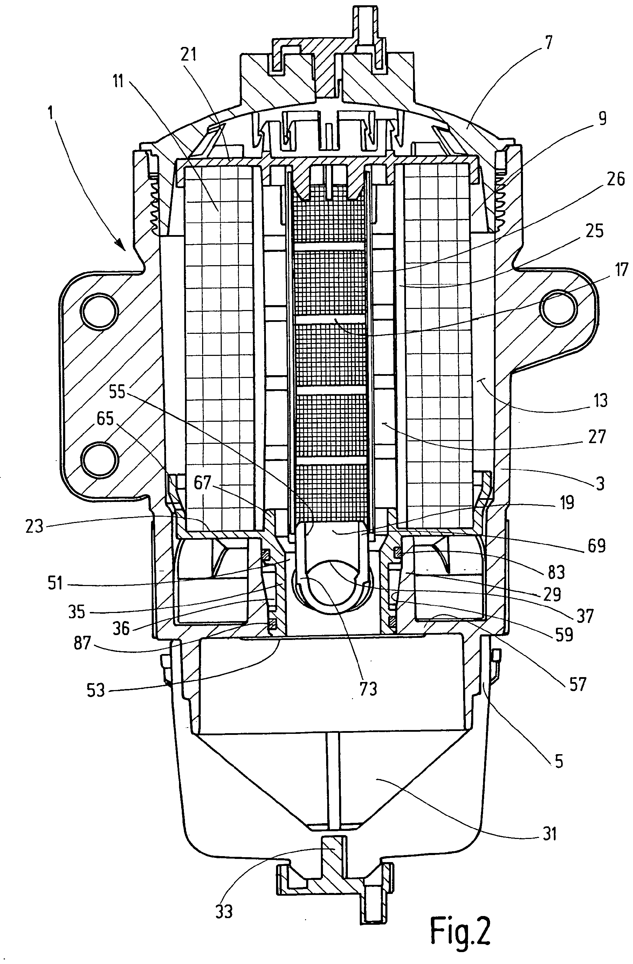

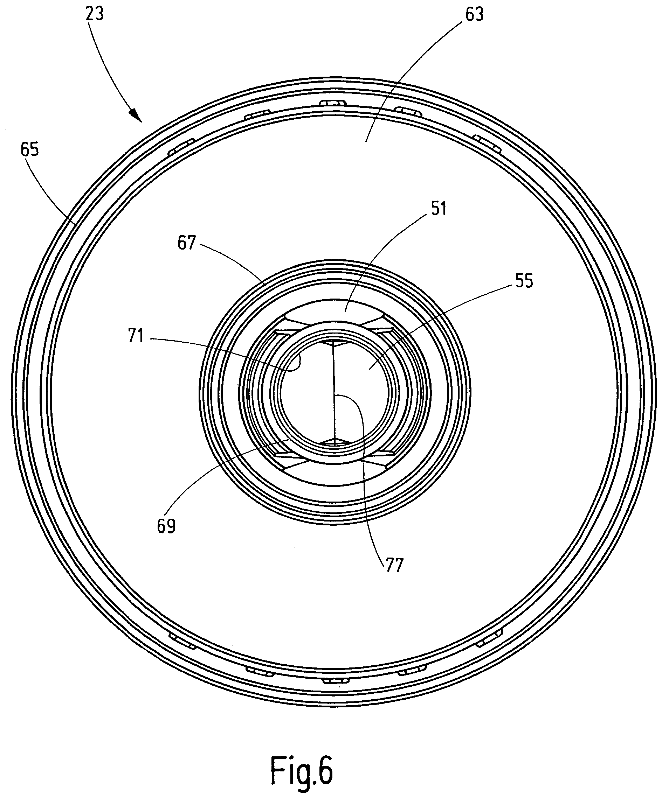

Das anhand der Fig. 2 bis 6 erläuterte Ausführungsbeispiel der erfindungsgemäßen Vorrichtung unterscheidet sich demgegenüber hauptsächlich durch eine besondere Gestaltung der der Elementaufnahme 29 zugeordneten Endkappe 23 und der hieran angepassten speziellen Bauweise der Elementaufnahme 29. Während beim Stand der Technik der Wasserdurchlass 39 am Boden des Abscheideraumes 27 in direkter Verbindung zum Wassersammelraum 31 steht, so dass das abgeschiedene Wasser, siehe Pfeile 45 von Fig. 1, entlang der Außenseite der Elementaufnahme 29 zum Sammelraum 31 abfließt, bildet bei der Erfindung der Rohrstutzen 35 der Endkappe 23 nicht nur einen Fluidweg 55 für den Ausstrom abgereinigten Kraftstoffes aus der Reinseite 19 des Filterelementes 9 heraus und zum Kraftstoffaustritt 37 hin, sondern der Rohrstutzen 35 bildet zusätzlich zu diesem Fluidweg 55 einen hiervon getrennten weiteren inneren Fluidweg 51, der vom Abscheideraum 27 über das freie untere Ende 53 des Rohrstutzens 35 zum Wassersammelraum 31 führt. Diese Gestaltung der Fluidwege 51 für Wasser und eines hiervon getrennten inneren Fluidweges 55 zwischen Reinseite 19 und Kraftstoffaustritt 37 eröffnet die Möglichkeit, die Elementaufnahme 29 an einem Zwischenboden 57 vorzusehen, der einen zentralen Durchgangskanal 59 zum bodenseitigen Wassersammelraum 31 bildet. Die Abdichteinrichtung, die beim Filtrationsbetrieb die Rohseite 13 vom Wassersammelraum 31 trennt, braucht daher nicht am Umfangsrand der Endkappe 23 vorgesehen zu sein, sondern kann zwischen Rohrstutzen 35 und der Elementaufnahme 29 am zentralen Durchgangskanal 59 vorgesehen sein, also mit vorteilhaft geringem Dichtungsdurchmesser.

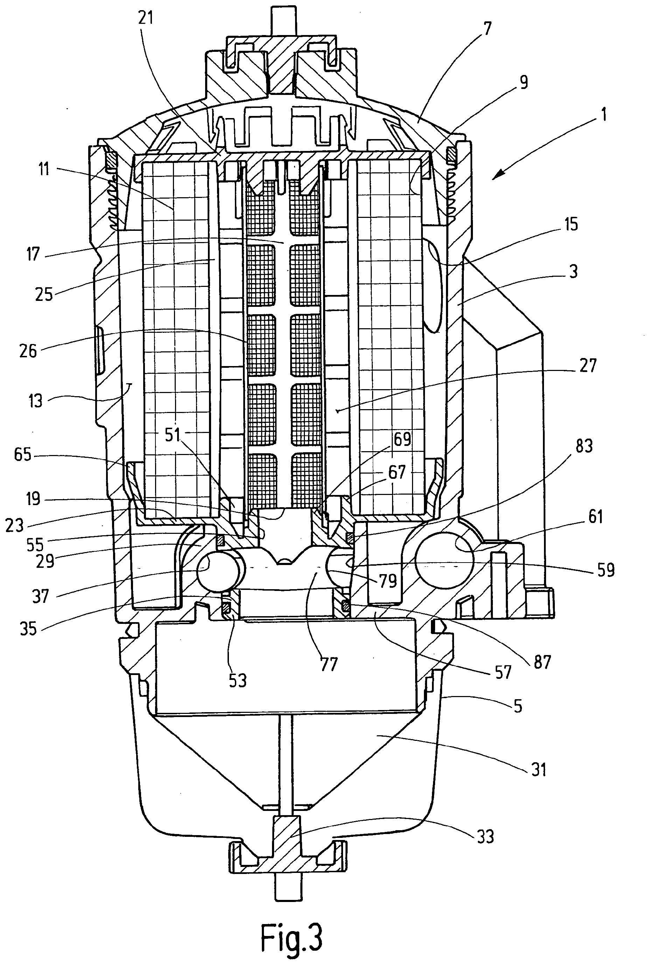

Die Fig. 2 und 3 zeigen verschiedene Stellungen des Filtergehäuses 1, wobei in Fig. 2 der innere Fluidweg 51 des Rohrstutzens 35 der Endkappe 23 deutlich zu sehen ist, der den Abflussweg für den Austritt abgeschiedenen Wassers aus dem Abscheideraum 27 zum Wassersammelraum 31 bildet. Bei der demgegenüber um 90° verdrehten Darstellung von Fig. 3 ist der andere Fluidweg 55 deutlicher erkennbar, über den aus der Reinseite 19 des inneren Hohlraumes 17 des Filterelementes 9 austretender, abgereinigter Kraftstoff zum Kraftstoffaustritt 37 strömt und von dort über einen Auslauf 61 das Gehäuse verlässt.

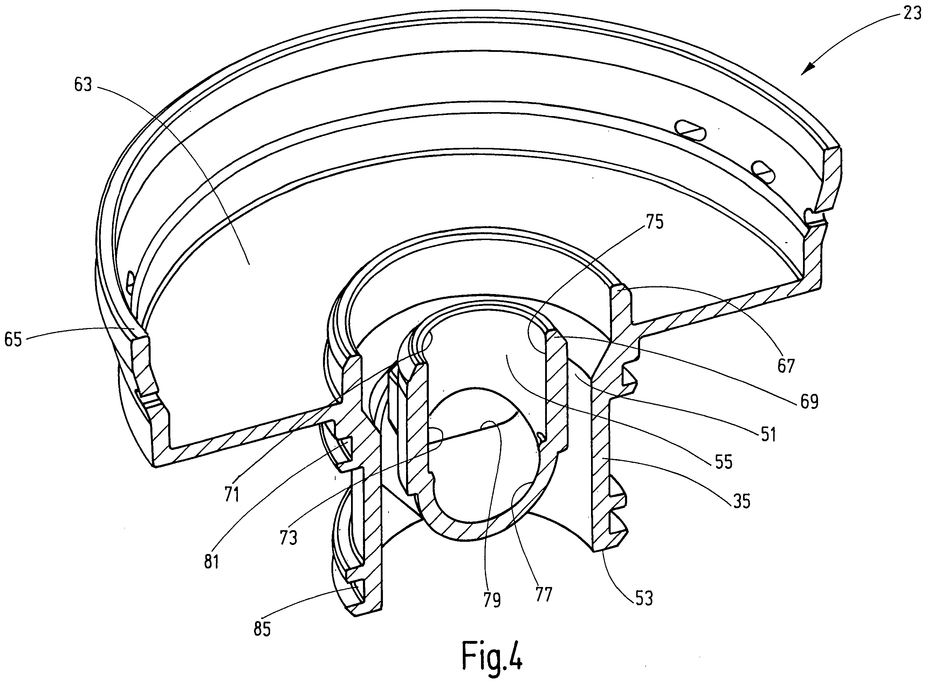

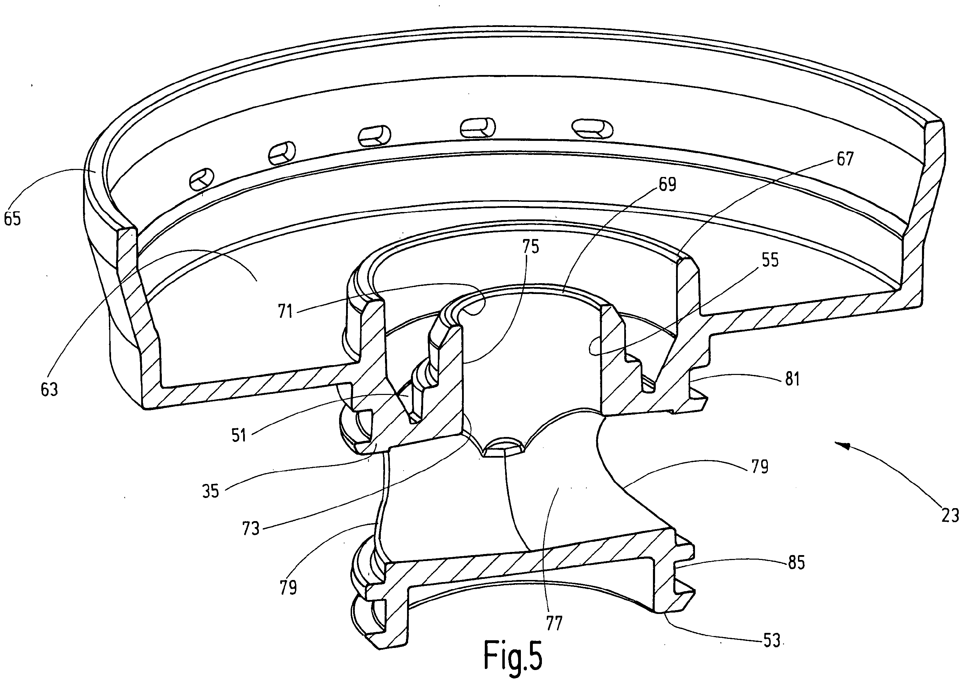

Die Fig. 4 bis 6 zeigen nähere Einzelheiten der Gestaltung der Endkappe 23. Wie bei derartigen Endkappen üblich, handelt es sich um ein einteiliges Spritzformteil aus Kunststoffwerkstoff mit einem aus einer kreisrunden, ebenen Bodenfläche 63 vorstehenden, eine äußere Einfassung des Filterelementes 9 bildenden Umfangsrand 65. Von der Unterseite der Bodenfläche 63 erstreckt sich der zentrale Rohrstutzen 35, der an der Oberseite der Bodenfläche 63 in einen nach oben vorstehenden Verbindungsring 67 übergeht, der einen etwas größeren Durchmesser als der an der Unterseite befindliche Rohrstutzen 35 besitzt. Innerhalb des Verbindungsringes 67 und hierzu konzentrisch befindet sich ein zweiter, über die Ebene der Bodenfläche 63 nach oben vorstehender Verbindungsring 69. Dieser bildet das Einlaufende 71 eines inneren Rohrkörpers 73, der sich im Inneren des Rohrstutzens 35 befindet. Dieser Rohrkörper 73 bildet den inneren Fluidweg 55 der in der Endkappe 23 für die Verbindung zwischen Reinseite 19 und dem Kraftstoffaustritt 37 vorgesehen ist. Wie Fig. 2 und 3 zeigen, erstreckt sich der innere Verbindungsring 69 in den die Reinseite 19 bildenden Filterhohlraum 17, wobei der Ring 69 außenseitig an der Innenseite des hydrophoben Siebes 26 anliegt. Der äußere Verbindungsring 67 ragt in den Abscheideraum 27 und liegt außenseitig am Stützrohr 25 des Filtermediums 11 an. Wie am deutlichsten aus Fig. 4 zu ersehen ist, ist entlang der Innenseite des Ringes 67 und entlang der Außenseite des inneren Rohrkörpers 73 der Fluidweg 51 für das abgeschiedene Wasser gebildet, das am unteren Ende 53 des Rohrstutzens 35 austritt. Die demgegenüber um 90° verdrehte Darstellung der Fig. 5 zeigt demgegenüber deutlicher den Fluidweg 55 für den abgereinigten Kraftstoff, der über das Einlaufende 71 in den Rohrkörper 73 eintritt und über ein sich axial erstreckendes Einlaufteil 75 in der Art eines T-Rohres in einen Querkanal 77 übergeht, der zwei Austrittsenden 79 bildet, aus denen der Kraftstoff zum Kraftstoffaustritt 37 gelangt.

Am Außenumfang des Rohrstutzens 35 befindet sich zwischen den Austrittsenden 79 und der Bodenfläche 63 eine Ringnut 81 für einen O-Ring 83 für die Abdichtung zwischen der der Rohseite 13 zugehörigen Oberseite des Zwischenbodens 57 der Elementaufnahme 29 und der Reinseite 19. Eine dem unteren freien Ende 53 benachbarte Ringnut 85 bildet den Sitz für einen O-Ring 87 zur Abdichtung zwischen den der Reinseite 13 zugehörigen Austrittsenden 79 des Rohrkörpers 73 und dem Wassersammelraum 31. Wie aus Fig. 2 ersichtlich ist, ist zwischen den O-Ringen 85, 87 zwischen der Außenseite des Rohrstutzens 35 und der Innenseite des Durchgangskanales 59 ein Verbindungsraum 36 gebildet, über den der abgereinigte Kraftstoff aus den Austrittsenden 79 zum Austritt 37 des Gehäuses 1 gelangt.

## Patentansprüche

1. Filterelement (9) mit einem Filtermedium (11), das für einen Filtriervorgang von seiner äußeren Rohseite (13) her in einen inneren, die Reinseite (19) bildenden Filterhohlraum (17) hinein durchströmbar ist, wobei zwischen Rohseite (13) und innerem Filterhohlraum (17) eine Wasser-Abscheideeinrichtung (26) und ein Abscheideraum (27) für abgeschiedenes Wasser vorhanden sind und das Filterelement (9) an seinem dem Bodenteil (5) eines zuordenbaren Filtergehäuses (1) zuwendbaren unteren Ende durch eine Endkappe (23) eingefasst ist, die einen Rohrstutzen (35) aufweist und an einer Elementaufnahme (29) des Filtergehäuses (1) festlegbar ist, die sich oberhalb eines am Boden des Filtergehäuses (1) befindlichen Wassersammelraumes (31) befindet und für aus der Reinseite (19) austretendes Fluid einen aus dem Gehäuse (1) herausführenden Fluidaustritt (37) bildet, **dadurch gekennzeichnet, dass** in dem Rohrstutzen (35) der Endkappe (23) getrennte Fluidwege (55, 51) ausgebildet sind, von denen bei der Funktionsposition des Filterelementes (9) der eine (55) die Verbindung zwischen der inneren Reinseite (19) des Filterelementes (9) und dem Fluidaustritt (37) des Gehäuses (1) und der weitere Fluidweg (51) die Verbindung vom Abscheideraum (27) des Filterelementes (9) zum Wassersammelraum (31) bildet, und dass die Endkappe (23) zur Bildung des Fluidweges (55) zwischen der Reinseite (19) und dem Fluidaustritt (37) innerhalb des Rohrstutzens (35) einen inneren Rohrkörper (73) aufweist, der sich mit seinem Einlaufende (71) in den die Reinseite (19) bildenden Filterhohlraum (17) erstreckt und an einem Austrittsende (79) zu einem an der Außenseite des Rohrstutzens (35) befindlichen Verbindungsraum (36) hin offen ist.

2. Filter, insbesondere für mit Wasserbeimengungen belastete Fluide wie Dieselöl, mit einem Filtergehäuse (1), in dem mindestens ein Filterelement (9) gemäß Anspruch 1 aufgenommen ist, dessen Filtermedium (11) beim Filtriervorgang von seiner äußeren Rohseite (13) her in einen inneren, die Reinseite (19) bildenden Filterhohlraum (17) hinein durchströmbar ist, wobei zwischen Rohseite (13) und innerem Filterhohlraum (17) eine Wasser-Abscheideeinrichtung (26) und ein Abscheideraum (27) für abgeschiedenes Wasser vorhanden sind und das Filterelement (9) an seinem dem Bodenteil (5) des Filtergehäuses (1) zugewandten unteren Ende durch eine Endkappe (23) eingefasst ist, die einen Rohrstutzen (35) mit einem Durchlass für aus dem die Reinseite (19) bildenden Filterhohlraum (17) austretendes Fluid und einen den Durchlass zumindest teilweise umgebenden, zum Abscheideraum (27) offenen Wasserdurchlass (39) aufweist und an einer Elementaufnahme (29) des Filtergehäuses (1) festlegbar ist, die sich oberhalb eines am Boden des Filtergehäuses (1) befindlichen Wassersammelraumes (31) befindet und für aus der Reinseite (19) austretendes Fluid einen aus dem Gehäuse (1) herausführenden Fluidaustritt (37) bildet, **dadurch gekennzeichnet, dass** der Wasserdurchlass (39) innerhalb des Rohrstutzens (35) der Endkappe (23) einen Fluidweg (51) bildet, der von dem bei der Funktionsposition des Filterelementes (9) die Verbindung zwischen der inneren Reinseite (19) des Filterelementes (9) und dem Fluidaustritt (37) des Gehäuses (1) bildenden anderen Fluidweg (55) getrennt ist, dass die Elementaufnahme (29) einen Durchgangskanal (59) zum Wassersammelraum (31) hin bildet, dass zwischen dem Durchgangskanal (59) und dem Rohrstutzen (35) der Endkappe (23) befindliche Dichtungsanordnungen (83, 87) an der Außenseite des Rohrstutzens (35) einen Verbindungsraum (36) begrenzen, der den anderen Fluidweg (55) mit dem Fluidaustritt (37) des Gehäuses (1) verbindet, und dass die Endkappe (23) zur Bildung des Fluidweges (55) zwischen der Reinseite (19) und dem Fluidaustritt (37) innerhalb des Rohrstutzens (35) einen inneren Rohrköper (73) aufweist, der sich mit seinem Einlaufende (71) in den die Reinseite (19) bildenden Filterhohlraum (17) erstreckt und an einem Austrittsende (79) zu dem an der Außenseite des Rohrstutzens (35) befindlichen Verbindungsraum (36) hin offen ist.

3. Filter nach Anspruch 2, **dadurch gekennzeichnet, dass** der Rohrstutzen (35) der Endkappe (23) ein zum Wassersammelraum (31) offenes, freies unteres Ende (53) besitzt und dass zwischen der Außenseite des inneren Rohrkörpers (73) und der Innenseite des Rohrstutzens (35) ein Freiraum den Fluidweg (51) vom Abscheideraum (27) zum Wassersammelraum (31) bildet.

4. Filter nach Anspruch 2 oder 3, **dadurch gekennzeichnet, dass** der Rohrstutzen (35) und der innere Rohrkörper (73) mit ihren dem Innenraum (17) des Filterelementes (9) zugewandten Enden jeweils konzentrische Verbindungsringe (67, 69) bilden, von denen der äußere Ring (67) in den Abscheideraum (31) ragt und außenseitig am Stützrohr (25) des Filtermediums (11) anliegt und der innere Ring (69) in den inneren Filterhohlraum (17) ragt und außenseitig an der Innenseite eines die Reinseite (19) umgebenden, Teil der Wasser-Abscheideeinrichtung bildenden hydrophoben Siebes (26) anliegt.

5. Filter nach einem der Ansprüche 2 bis 4, **dadurch gekennzeichnet, dass** die Dichtungsanordnungen zwischen Rohrstutzen (35) der Endkappe (23) und Durchgangskanal (59) der Elementaufnahme (29) jeweils durch in Ringnuten (81, 85) des Rohrstutzens (35) sitzende O-Ringe (83, 87) gebildet sind.

6. Filter nach Anspruch 5, **dadurch gekennzeichnet, dass** ein O-Ring (87) für die Abdichtung zwischen dem der Reinseite (19) zugehörigen Austrittsende (79) des inneren Rohrkörpers (73) und dem Wassersammelraum (31) nahe des unteren freien Endes (53) des Rohrstutzens (35) angeordnet und ein O-Ring (83) für die Abdichtung zwischen der der Rohseite (13) zugehörigen Oberseite des Zwischenbodens (57) der Elementaufnahme (29) und der Reinseite (19) am Rohrstutzen (35) oberhalb des Austrittsendes (79) des inneren Rohrkörpers (73) angeordnet sind.

7. Filter nach einem der Ansprüche 2 bis 6, **dadurch gekennzeichnet, dass** der innere Rohrkörper (73) in der Art eines T-Rohres geformt ist, wobei ein am inneren Verbindungsring (69) mündendes, sich axial erstreckendes Einlaufteil (75) in einen Querkanal (77) übergeht, der zwei Austrittsenden (79) bildet, die an der Außenseite des Rohrstutzens (35) an zwei einander gegenüberliegenden Stellen in den Verbindungsraum (36) münden.

## Claims

1. Filter element (9) with a filter medium (11), through which flow can take place for a filtration procedure from an outer unfiltered side (13) to a filter cavity (17) forming the filtered side (19) wherein, between unfiltered side (13) and inner filter cavity (17), a water separation device (26) and a separation chamber (27) for separated water are provided and the filter element (9) at its lower end associated with the base part (5) of an associated filter housing (1) is surrounded by an end cap (23), which has a tube connector (35) and can be secured on an element mounting (29) of the filter housing (1), which is located above a water collection chamber (31) positioned at the base of the filter housing (1) and forms a fluid outlet (37) leading out of the housing (1) for fluid draining from the filtered side (19), **characterised in that** separate fluid paths (55, 51) are formed in the tube connector (35) of the end cap (23), of which, of those in the functional position of the filter element (9), one (55) forms the connection between the inner filtered side (19) of the filter element (9) and the fluid outlet (37) of the housing (1), and the further fluid path (51) the connection from the separation chamber (27) of the filter element (9) to the water collection chamber (31), and that the end cap (23) has an inner tube body (73) within the tube connector (35), for forming the fluid path (55) between the filtered side (19) and the fluid outlet (37) which extends with its inlet end (71) in the filter cavity (17) forming the filtered side (19) and, at an outlet end (79), is open to a connection chamber (36) at the outside of the tube connector (35).

2. Filter, in particular for fluids, such as diesel oil, contaminated with water additions, with a filter housing (1), in which at least one filter element (9) in accordance with claim 1 is accommodated, where flow takes place through its filter medium (11) during the filtration process from its outer contaminated side (13) to the inner filter cavity (17) forming the uncontaminated side (19), wherein, between unfiltered side (13) and inner filter cavity (17), a water separation device (26) and a separation chamber (27) for separated water are provided and the filter element (9) at its lower end facing the base portion (5) of the filter housing (1) is enclosed by an end cap (23), which has a tube connector (35) with a passage for fluid draining from the filter cavity (17) forming the uncontaminated side (19) and a water passage (39) open to the separation chamber (27) and at least partially surrounding the passage and securable on an element mounting (29) of the filter housing (1), which is located above a water collection chamber (31) on the base of the filter housing (1) and forms a fluid outlet (37) leading out of the housing (1) for fluid draining from the uncontaminated side (19), **characterised in that** the water passage (39) within the tube connector (35) of the end cap (23) forms a fluid path (51) which, in the functional position of the filter element (9), is separate from other fluid path (55) forming the connection between the inner uncontaminated side (19) of the filter element (9) and the fluid outlet (37) of the housing (1), that the element mounting (29) forms a through-flow channel (59) to the water collection chamber (31), that sealing arrangements (83, 87) between the through-flow channel (59) and the tube connector (35) of the end cap (23) define a connection chamber (36) on the outside of the tube connector (35), which connects the other fluid path (55) with the fluid outlet (37) of the housing (1), and that, to form the fluid path (55) between uncontaminated side (19) and the fluid outlet (37) the end cap (23) has an inner tube body (73), which extends with its inlet end (71) in the filter cavity (17) forming the uncontaminated side (19) and, at an outlet end (79) is open to the connection chamber (36) located on the outside of the tube connector (35).

3. Filter in accordance with claim 2, **characterised in that** the tube connector (35) of the end cap (23) has a free lower end (53) open to the water collection chamber (31) and that a space between the outside of the inner tube body (73) and the inside of the tube connector (35) forming the fluid path (51) from the separation chamber (27) to the water collection chamber (31).

4. Filter in accordance with claim 2 or 3, **characterised in that** the tube connector (35) and the inner tube body (73) with their ends facing the inside (17) of the filter element (9) each form concentric rings (67, 69), of which the outer ring (67) projects into the separation chamber (31) and externally abuts the support tube (25) of the filter medium (11) and the inner ring (69) projects into the inner filter cavity (17) and externally abuts the inside part of a hydrophobic sieve (26) forming part of the water separation device and surrounding the uncontaminated side (19).

5. Filter in accordance with claims 2 to 4, **characterised in that** the sealing arrangements between tube connector (35) the end cap (23) and through-flow channel (59) of the element mounting (29) are each formed by O-rings (83, 87) seated in annular grooves (81, 85) of the tube connector (35).

6. Filter in accordance with claim 5, **characterised in that** an O-Ring (87) is located for the seal between the outlet end (79) of the inner tube body (73) associated with the uncontaminated side (19) and the water collection chamber (31) near the lower free end (53) of the tube connector (35) and an O-Ring (83) for the seal between upper side of the intermediate base (57) of the element mounting (29) associated with the uncontaminated side (13) and the uncontaminated side (19) on the tube connector (35) above the outlet end (79) of the inner tube body (73).

7. Filter in accordance with claims 2 to 6, **characterised in that** the inner tube body (73) is shaped as a type of T-tube, wherein an inlet part (75) extending axially and opening at an inner connection ring (69) merges into a transverse channel (77), which forms two outlet ends (79), which open at the outside of the connector (35) at two opposing positions in the connection chamber (36).

## Revendications

1. Elément (9) de filtre, comprenant un milieu (11) filtrant, qui, pour une opération de filtration, peut être traversé de son côté (13) brut extérieur à une cavité (17) de filtre intérieure formant le côté (19) propre, dans lequel il y a, entre le côté (13) brut et la cavité (17) intérieure de filtre, un dispositif (26) de séparation d'eau et un espace (27) de séparation pour de l'eau séparée et l'élément (9) de filtre est, à son extrémité inférieure pouvant être tourné vers la partie (5) de fond d'un corps (1) de filtre pouvant être associé, enchâssé par une coiffe (23) d'extrémité, qui a une tubulure (35) et qui peut être fixée sur un logement (29) d'élément du corps (1) du filtre, qui se trouve au-dessus d'un espace (31) collecteur d'eau se trouvant au fond du corps (1) du filtre et qui forme, pour du fluide sortant du côté (19) propre, une sortie (37)pour du fluide sortant du corps (1), **caractérisé en ce que**, dans la tubulure (35) de la coiffe (23) d'extrémité, sont constitués des trajets (55, 51) de fluide distincts, dont, lorsque l'élément (9) de filtre est en position de fonctionnement, l'un (55) forme la communication entre le côté (19) intérieur propre de l'élément (9) de filtre et la sortie (37) de fluide du corps (1), et l'autre trajet (51) pour du fluide forme la liaison de l'espace (27) de séparation de l'élément (9) de filtre à l'espace (31) collecteur d'eau, et **en ce que** la coiffe (23) d'extrémité a, pour la formation du trajet (55) de fluide, entre le côté (19) propre et la sortie (37) de fluide, à l'intérieur de la tubulure (35), une pièce (73) intérieure tubulaire, qui s'étend, par son extrémité (71) d'entrée, dans la cavité (17) du filtre formant le côté (19) propre et est ouverte à une extrémité (79) de sortie vers un espace (36) de communication se trouvant du côté extérieur de la tubulure (35).

2. Filtre, notamment pour des fluides chargés d'additions d'eau, comme de l'huile diesel, comprenant un corps (1) de filtre, dans lequel est reçu au moins un élément (9) de filtre suivant la revendication 1, dont le milieu (11) filtrant peut, lors de l'opération de filtration, être traversé de son côté (13) brut extérieur à une cavité (17) de filtre intérieure formant le côté (19) propre, dans lequel il y a, entre le côté (13) brut et la cavité (17) intérieure du filtre, un dispositif (26) de séparation d'eau et un espace (27) de séparation pour de l'eau séparée et l'élément (9) de filtre est, à son extrémité inférieure tournée vers la partie (5) de fond du corps (1) du filtre, enchâssé par une coiffe (23) d'extrémité, qui a un passage pour du fluide sortant de la cavité (17) de filtre formant le côté (19) propre et une traversée (39) pour de l'eau ouverte vers l'espace (27) de séparation et entourant, au moins en partie, la traversée, et qui peut être fixée sur un logement (29) d'élément du corps (1) du filtre, qui se trouve au-dessus d'un espace (31) collecteur d'eau se trouvant au fond du corps (1) du filtre et qui forme, pour du fluide sortant du côté (19) propre, une sortie (37) de fluide sortant du corps (1), **caractérisé en ce que** la traversée (39) pour de l'eau forme, à l'intérieur de la tubulure (35) de la coiffe (23) d'extrémité, un trajet (51) de fluide, qui est séparé de l'autre trajet (51) de fluide formant la communication entre le côté (19) intérieur propre de l'élément (9) de filtre et la sortie (37) de fluide du corps (1), **en ce que** le logement (29) d'élément forme un canal (59) de passage vers l'espace (31) collecteur d'eau, **en ce que** des agencements (83, 87) d'étanchéité, se trouvant entre le canal (59) de passage et la tubulure (55) de la coiffe (23) d'extrémité, délimitent, du côté extérieur de la tubulure (35), un espace (36) de communication, qui met l'autre trajet (55) de fluide en communication avec la sortie (37) de fluide du corps (1) et **en ce que** la coiffe (23) d'extrémité a, pour former le trajet (55) de fluide, entre le côté (19) propre et la sortie (37) de fluide à l'intérieur de la tubulure (35), une pièce (73) intérieure tubulaire, qui s'étend, par son extrémité (71) d'entrée, dans la cavité (17) du filtre formant le côté (19) propre et qui, à une extrémité (79) de sortie, est ouverte vers l'espace (36) de communication se trouvant du côté extérieur de la tubulure (35).

3. Filtre suivant la revendication 2, **caractérisé en ce que** la tubulure (35) de la coiffe (23) d'extrémité a une extrémité (53) inférieure libre ouverte vers l'espace (31) collecteur d'eau et **en ce que**, entre la face extérieure de la pièce (73) tubulaire intérieure et la face intérieure de la pièce (35) tubulaire, un espace libre forme le trajet (51) de fluide allant de l'espace (27) de séparation à l'espace (31) collecteur d'eau.

4. Filtre suivant la revendication 2 ou 3, **caractérisé en ce que** la tubulure (35) et la pièce (73) tubulaire intérieure forment, par leurs extrémités tournées vers l'espace (17) intérieur de l'élément (9) de filtre, respectivement des anneaux (67, 69) de communication concentriques, dont l'anneau (67) extérieur pénètre dans l'espace (31) de séparation et s'applique, du côté extérieur, au tuyau (25) d'appui du milieu (11) filtrant et l'anneau (69) intérieur pénètre dans la cavité (17) intérieure du filtre et, du côté extérieur, s'applique à la face intérieure d'un tamis (26) hydrophobe entourant le côté (19) propre et formant une partie du dispositif de séparation d'eau.

5. Filtre suivant l'une des revendications 2 à 4, **caractérisé en ce que** les agencements d'étanchéité, entre la tubulure (35) de la coiffe (23) d'extrémité et le canal (59) de passage du logement (29) d'élément, sont formés chacun par des joints (83, 87) toriques mis dans des rainures (81, 85) annulaires de la tubulure (35).

6. Filtre suivant la revendication 5, **caractérisé en ce qu'**un joint (87) torique est, pour donner l'étanchéité entre l'extrémité (79) de sortie, associée au côté (19) propre, de la pièce (73) tubulaire intérieure, et l'espace (31) collecteur d'eau, disposé près de l'extrémité (53) libre inférieure de la tubulure (35) et un joint (83) torique est, pour donner l'étanchéité entre le côté supérieur, associé au côté (13) propre, du fond (57) intermédiaire du logement (29) d'élément, et le côté (19) propre, disposé sur la tubulure (25), au-dessus de l'extrémité (9) de sortie de la pièce (73) tubulaire intérieure.

7. Filtre suivant l'une des revendications 2 à 6, **caractérisé en ce que** la pièce (73) tubulaire intérieure est formée à la manière d'un tuyau en T, dans lequel une partie (75) d'entrée, débouchant sur l'anneau (69) intérieure de communication et s'étendant axialement, se transforme en un canal (77) transversal, qui forme deux extrémités (79) de sortie, lesquelles débouchent, du côté extérieur de la tubulure (35), dans l'espace (36) de communication en deux points opposés l'un à l'autre.
